# EUROPEAN PATENT SPECIFICATION

(11) **EP 0 299 474 B1**
(45) Date of publication and mention of the grant of the patent: **19.05.1993**
(21) Application number: 88111319.5
(22) Date of filing: 14.07.1988
(51) Int. Cl.: G02B 13/22, G02B 9/60

(54) **Telecentric image-forming optical system for large image size**
Telezentrisches optisch abbildendes System für grosse Bildgrössen
Optique de reproduction télécentrique pour l'images à grandes dimensions

(30) Priority: 14.07.1987 JP 176808/87
(43) Date of publication of application: 18.01.1989
(73) Proprietor: Dainippon Screen Mfg. Co., Ltd., Kamikyo-ku Kyoto 602 (JP)
(72) Inventor: Wakimoto, Zenji Dainippon Screen Mfg. Co.Ltd., Horikawa-dori Kamikyo-ku Kyoto (JP); Hayashi, Takahisa Dainippon Screen Mfg. Co., Ltd., Horikawa-dori Kamikyo-ku Kyoto (JP)
(74) Representative: Goddar, Heinz J., Dr.

(56) References cited:
- SOVIET INVENTIONS ILLUSTRATED, Derwent Publications Ltd., section P, week K01, 16th February 1983, London, GB, abstract no. A 2593 P 81; & SU A 909652
- PATENT ABSTRACTS OF JAPAN, vol. 10, no. 152 (P-462)(2208), 3rd June 1986; & JP A 614013

## Description

This invention relates to a telecentric image-forming optical system with the features of the first part of claim 1 as known from Abstract A 2593 K/01 SU-A-909,652.

In known telecentric image-forming optical systems, the secondary focal point of a first lens group having a positive focal length and disposed in front of a lens disposed at the centre of the optical system coincides with the principal focal length of a second lens group having a positive focal length and disposed behind the central lens. In this arrangement, when an object, or a real image formed by an optical system disposed in front of the first lens group, is placed in the vicinity of the principal focal point of the first lens group, a real image whose magnification corresponds to the ratio between the focal lengths of the first and second lens groups is formed in the vicinity of the secondary focal point of the second lens group.

In this case, if the interval between the principal points of the respective lenses are ignored, the distance between the object and the image is approximately twice as great as the sum of the focal lengths of the lens groups.

In such a telecentric image-forming optical system, it is difficult to create a wide angle of view. Therefore, if a large image size is required, it is necessary to make the optical system large, thereby requiring an apparatus which incorporates such an optical system to be large.

Such an optical system may, for example, be incorporated in an image reader for reading an original document by a solid state image sensor (for example, a CCD), an exposing apparatus for printing mask patterns of an IC or an LSI on a semiconductor wafer, a scanning recording apparatus such as a laser plotter, a laser printer or the like. A telecentric image-forming optical system is employed in these apparatuses because the image-forming magnification does not vary if the object distance is changed. Furthermore, the use of a telecentric image-forming optical system prevents the resolution from degrading and the intensity of marginal rays from being reduced.

The present invention aims to solve the above-described problems.

Accordingly, the invention provides a telecentric image-forming optical system with the features of claim 1.

Subject matter of subclaims are preferred embodiments of the invention.

Since the double-convex lens having a positive focal length is interposed between the first and second lens groups constituting the telecentric image-forming optical system, the telecentric characteristic is maintained, whilst the object distance and image distance are shortened. Accordingly, the distance between the object and the image is shortened.

It is to be noted that, when the refracting power of the convex lens interposed between the first and second lens groups is great so as to reduce the object distance and the image distance, the field curvature becomes large. In order to prevent such an occurrence, a concave lens having a negative focal length is disposed in the first and second lens groups, respectively, so as to correct the curvature of the field, whereby to flatten the image surface and enable the image size to be enlarged.

In order that the invention may be more readily understood, embodiments thereof will now be described by way of example, with reference to the accompanying drawings in which:
Figure 1 is a schematic view showing the essential construction and arrangement of a telecentric image-forming optical system embodying the present invention;
Figure 2 shows aberration curves illustrating the spherical aberration and the astigmatism of the first embodiment shown in Figure 1;
Figure 3 is a schematic view of a lens arrangement according to a second embodiment;
Figure 4 shows aberration curves for the second embodiment;
Figure 5 is a schematic view of a lens arrangement according to a third embodiment;
Figure 6 shows aberration curves for the third embodiment;
Figure 7 is a schematic view of a lens arrangement according to a fourth embodiment;
Figure 8 shows aberration curves for the fourth embodiment;
Figure 9 is a schematic view of a lens arrangement according to a fifth embodiment;
Figure 10 shows aberration curves for the fifth embodiment;
Figure 11 is a schematic view of a lens arrangement according to a sixth embodiment;
Figure 12 shows aberration curves for the sixth embodiment;
Figure 13 is a schematic view of a lens according to a seventh embodiment;
Figure 14 shows aberration curves for the seventh embodiment;
Figure 15 is a schematic view of a lens arrangement view according to an eighth embodiment;
Figure 16 shows aberration curves for the eighth embodiment;
Figure 17 is a schematic view of a lens arrangement according to a ninth embodiment;
Figure 18 shows aberration curves for the ninth embodiment;
Figure 19 is a schematic view of a lens arrangement showing the entire arrangement of the fifth embodiment for comparison with the lens system shown in Figure 21;
Figure 20 shows aberration curves for the lens system shown in Figure 19;
Figure 21 is a schematic view of a lens arrangement according to a tenth embodiment;
Figure 22 shows aberration curves for the tenth embodiment;
Figure 23 is a schematic view of a lens arrangement according to an eleventh embodiment;
Figure 24 shows aberration curves for the eleventh embodiment;
Figure 25 is a schematic view of a known telecentric image-forming optical system, showing a portion behind the centre at which the focal points of lens groups coincide;
Figure 26 shows aberration curves for the prior art system shown in figure 25;
Figure 27 is a schematic perspective view of an apparatus to which an optical system embodying the present invention is applied;
Figure 28 is a schematic view showing the movement of a scanning head of the apparatus of Figure 27; and
Figure 29 is a schematic view showing the scanning head portion of the apparatus of Figure 27.

### First Embodiment

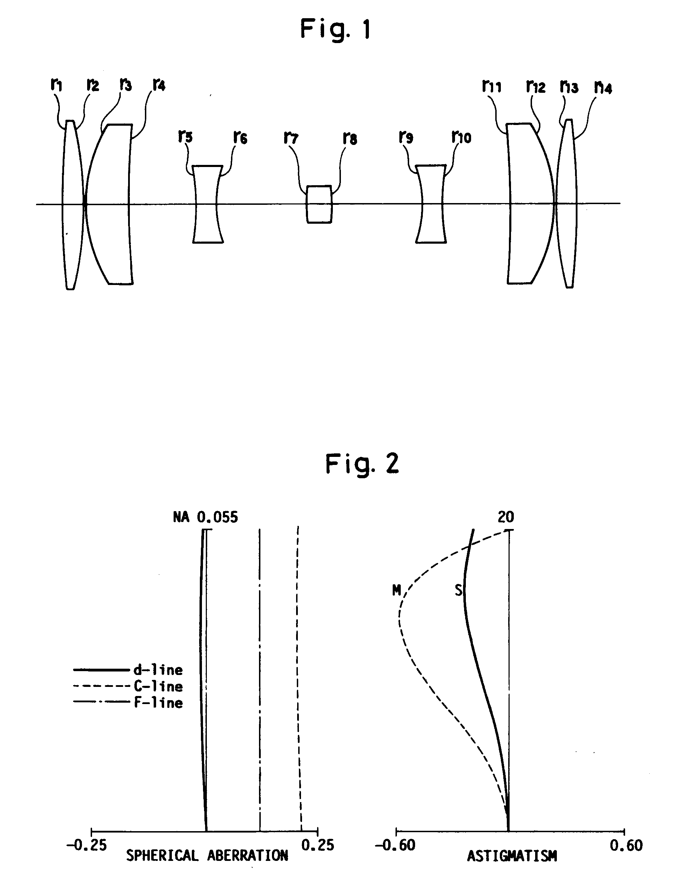

A first embodiment of the invention shown in Figure 1 illustrates the fundamental construction and arrangement of a telecentric image-forming optical system in accordance with the present invention, in which lens groups are symmetrically disposed with respect to the central plane of a double-convex lens (hereinafter referred to as the central lens) disposed at the centre of the optical system. Lens data for the respective lens groups shown in Figure 1 is listed in TABLE 1.

**TABLE 1**

| | r | d | n | γ |
|---|---|---|---|---|
| 1. | 352.5 | 6.3 | 1.603 | 65.4 |
| 2. | -116.50 | 0.6 | | |
| 3. | 45.87 | 14.7 | 1.620 | 63.5 |
| 4. | 545.00 | 21.1 | | |
| 5. | -68.90 | 6.3 | 1.616 | 31.0 |
| 6. | 33.95 | 29.3 | | |
| 7. | 72.00 | 8.0 | 1.486 | 81.8 |
| 8. | -72.00 | 29.3 | | |
| 9. | -33.95 | 6.3 | 1.616 | 31.0 |
| 10. | 68.90 | 21.1 | | |
| 11. | -545.00 | 14.7 | 1.620 | 63.5 |
| 12. | -45.87 | 0.6 | | |
| 13. | 116.50 | 6.3 | 1.603 | 65.4 |
| 14. | -352.25 | | | |
| d_{O}: 127.39 Distance between object and image; 419.38; Image-forming magnification: 1.0; Dimension of image plane: 40 ⌀; F-number: 9.1 (NA: 0.055) where (r) is the radius of curvature of the faces of the respective lenses; (d_{O}) is the distance between the object and the face of curvature r₁; d₁ to d₁₃ denote the central thickness of the respective lenses or the interval between the lenses along the optical axis; (n) is the refractive index of the respective lenses relative to the wavelength of 587.6nm; (γ) is the Abbe number of the respective lenses. | | | | |

Figure 2 shows aberration curves illustrating the spherical aberration and the astigmatism produced by the lenses in the embodiment of Figure 1.

In this first embodiment, the lens system is composed of single lenses, but preferably some of the lenses are cemented together using a glass material having a different refractive index and dispersion factor from the lenses so as to correct chromatic aberration of the lenses. The term glass material used herein includes a plastics material.

In each of the second to eighth embodiments to be described hereinafter, lenses cemented together are used to correct chromatic aberrations and flatten image surfaces. In order to simplify the drawings, a plane face at right angles to the optical axis is assumed vertically to intersect the double-convex lens (central lens) at the centre thereof and only lenses disposed behind the plane face are shown.

Accordingly, in the second to eighth embodiments, r₁ = ∞, which corresponds to the above-described plane face.

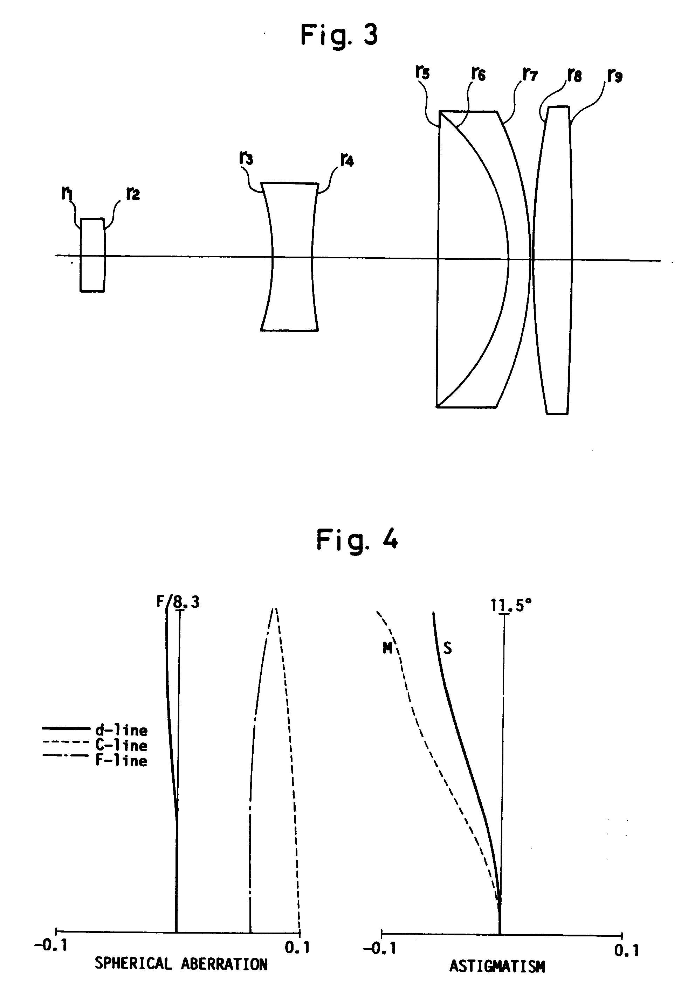

Each of the drawings (Figure 3 to 16) of spherical aberrations and astigmatisms in the second to eighth embodiments shows only the portion behind the plane face. Therefore, when the lens groups are arranged symmetrically with respect to the plane face in each of the second to eighth embodiments, the spherical aberration and the astigmatism are more than twice as large as those shown in the drawings.

### Second Embodiment

Figure 3 shows a lens arrangement of a second embodiment in which the lenses of one lens group are cemented together in order to correct the chromatic aberration and flatten the image surface. Lens data for the respective lens groups shown in Figure 3 is listed in TABLE 3.

**TABLE 2**

| | r | d | n | γ |
|---|---|---|---|---|
| 1. | ∞ | 4.4 | 1.593 | 67.9 |
| 2. | -95.83 | 30.0 | | |
| 3. | -40.70 | 6.9 | 1.595 | 35.5 |
| 4. | 75.16 | 22.8 | | |
| 5. | -2380.00 | 12.5 | 1.697 | 55.6 |
| 6. | -33.57 | 3.9 | 1.648 | 33.8 |
| 7. | -60.76 | 0.6 | | |
| 8. | 146.55 | 6.9 | 1.697 | 55.6 |
| 9. | -463.87 | | | |
| Focal length: 100; F-number: 8.3; Back focus: 120.54; Image size: 40 ⌀ (angle of view : 23°) where (r) is the radius of curvature of the faces of the respective lenses; d₁ to d₈ denote the thickness of the respective lenses or the distance between the adjacent faces of the lenses; (n) is the refractive index of the respective lenses relative to the wavelength of 587.6nm; (γ) is the Abbe number of the respective lenses. | | | | |

Figure 4 shows aberration curves illustrating the spherical aberration and the astigmatism produced by the lenses in the second embodiment.

### Third Embodiment

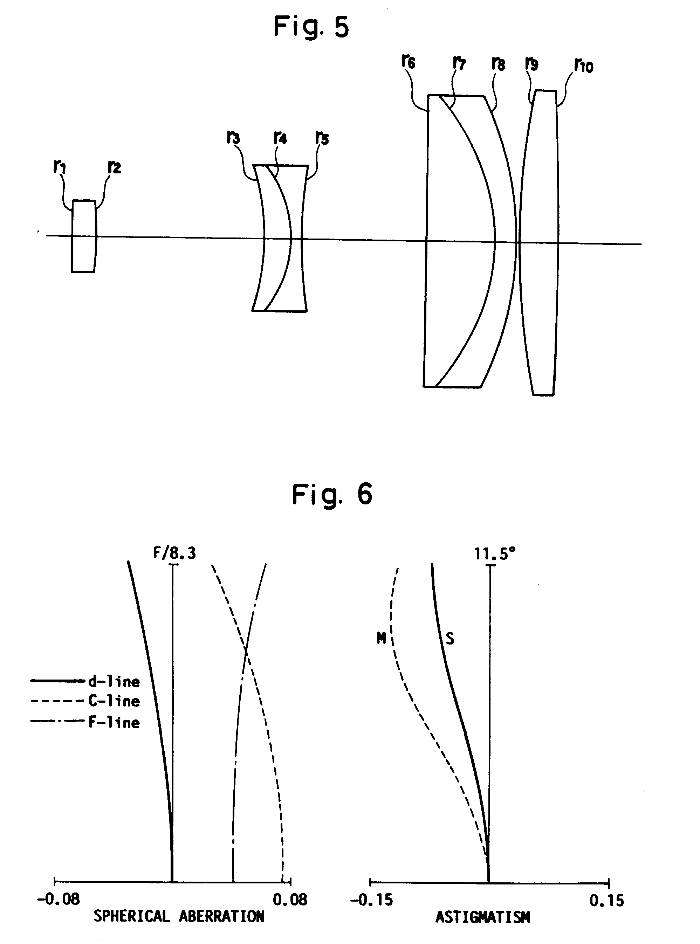

Figure 5 shows a lens arrangement of a third embodiment in which two lens groups are cemented together to correct the chromatic aberration and flatten the image surface. Lens data for the respective lens groups shown in Figure 5 is listed in TABLE 3.

**TABLE 3**

| | r | d | n | γ |
|---|---|---|---|---|
| 1. | ∞ | 4.3 | 1.620 | 60.3 |
| 2. | -99.00 | 30.3 | | |
| 3. | -39.60 | 5.0 | 1.623 | 58.2 |
| 4. | -18.80 | 1.8 | 1.613 | 37.0 |
| 5. | 78.35 | 22.55 | | |
| 6. | -2400.00 | 12.4 | 1.694 | 53.8 |
| 7. | -37.10 | 3.8 | 1.651 | 38.2 |
| 8. | -58.80 | 0.6 | | |
| 9. | 144.80 | 6.8 | 1.694 | 53.8 |
| 10. | -457.35 | | | |
| Focal length: 100; F-number: 8.3; Back focus: 120.74; Image size: 40 ⌀ (angle of view: 23°) | | | | |

Figure 6 shows aberration curves illustrating the spherical aberration and the astigmatism produced by the lenses in the third embodiment.

### Fourth Embodiment

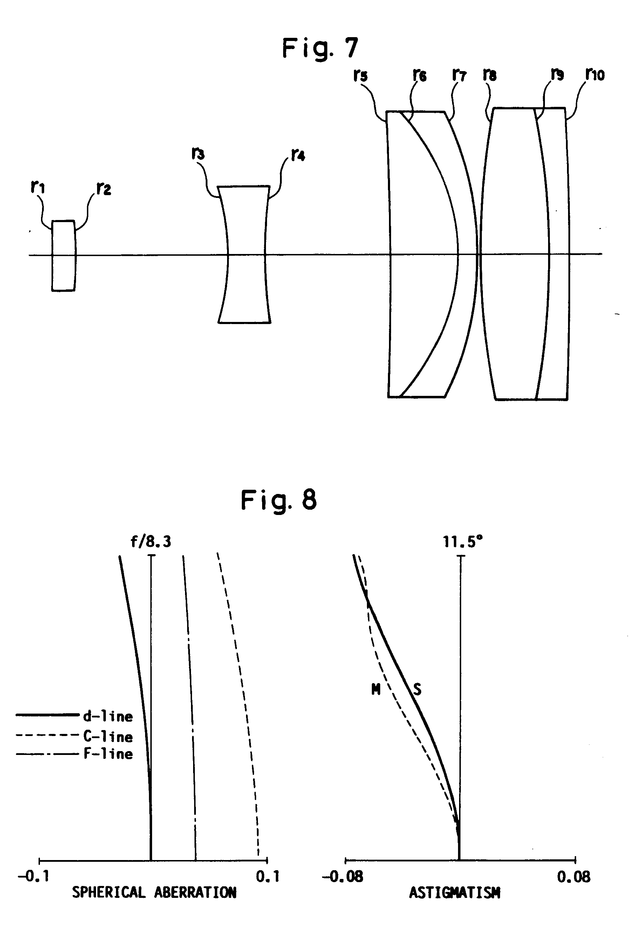

Figure 7 shows a lens arrangement of a fourth embodiment in which, similarly to the third embodiment, two lens groups are cemented together. Lens data for the respective lens groups shown in Figure 7 is listed in TABLE 4.

**TABLE 4**

| | r | d | n | γ |
|---|---|---|---|---|
| 1. | ∞ | 4.4 | 1.620 | 60.3 |
| 2. | -102.60 | 28.8 | | |
| 3. | -42.70 | 7.0 | 1.620 | 36.3 |
| 4. | 80.90 | 23.4 | | |
| 5. | -1930.00 | 13.0 | 1.694 | 53.8 |
| 6. | -37.20 | 3.7 | 1.648 | 33.8 |
| 7. | -60.90 | 0.6 | | |
| 8. | 151.20 | 13.0 | 1.694 | 53.8 |
| 9. | -132.00 | 3.7 | 1.689 | 31.1 |
| 10. | -404.00 | | | |
| Focal length: 100; F-number: 8.3; Back focus: 118.82; Image size: 40 ⌀ (angle of view: 23°) | | | | |

Figure 8 shows aberration curves illustrting the spherical aberration and the astigmatism produced by the lenses in the fourth embodiment.

### Fifth Embodiment

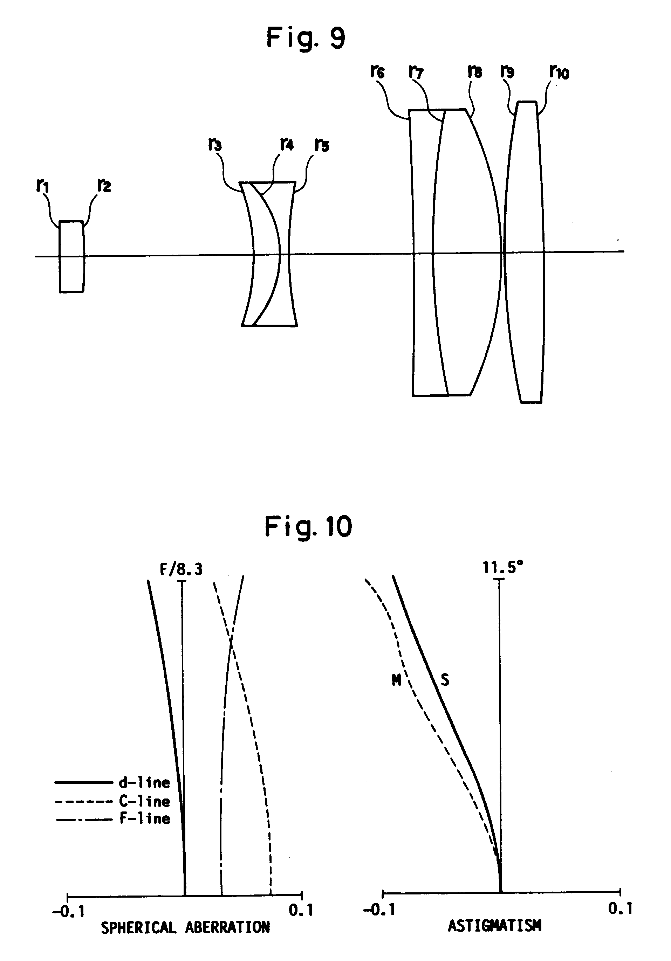

Figure 9 shows a lens arrangement of a fifth embodiment in which, similarly to the third and fourth embodiments, two lens groups are cemented together to correct the chromatic aberration and flatten the image surface. Lens data on the respective lens groups shown in Figure 9 is listed in TABLE 5.

**TABLE 5**

| | r | d | n | γ |
|---|---|---|---|---|
| 1. | ∞ | 4.3 | 1.620 | 60.3 |
| 2. | -98.45 | 30.8 | | |
| 3. | -41.00 | 5.0 | 1.620 | 60.3 |
| 4. | -18.45 | 1.8 | 1.613 | 37.0 |
| 5. | 77.75 | 22.4 | | |
| 6. | -2100.00 | 3.8 | 1.651 | 38.2 |
| 7. | 144.00 | 12.3 | 1.694 | 53.8 |
| 8. | -58.45 | 0.6 | | |
| 9. | 144.00 | 6.8 | 1.694 | 53.8 |
| 10. | -455.30 | | | |
| Focal length: 100; F-number: 8.3; Back focus: 118.38; Image size: 40 ⌀ (angle of view: 23°) | | | | |

Figure 10 shows aberration curves illustrating the spherical aberrations and the astigmatism produced by the lenses in the fifth embodiment.

### Sixth Embodiment

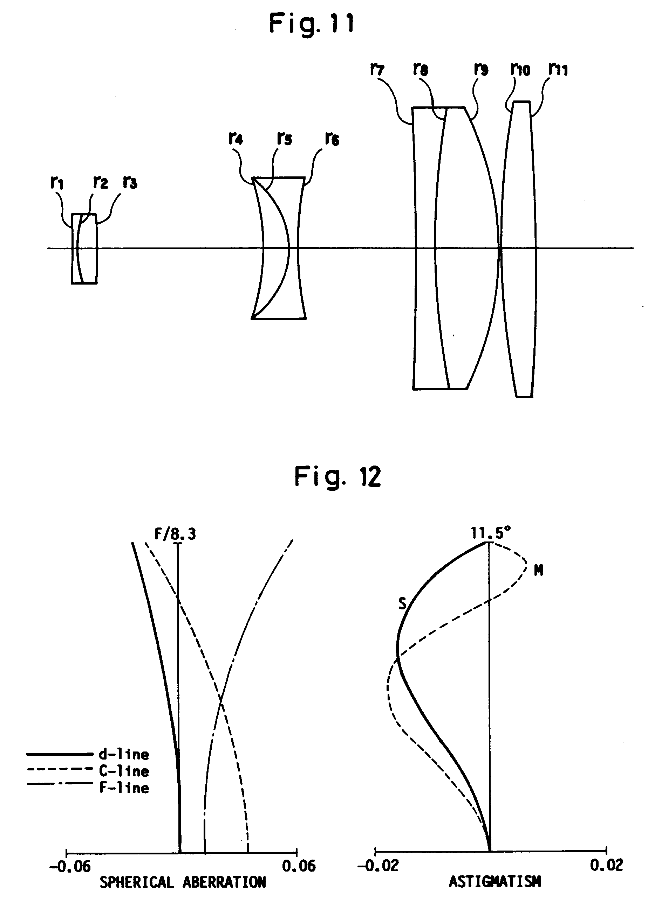

Figure 11 shows a lens arrangement of a sixth embodiment in which three lens groups are cemented together to correct the chromatic aberration and flatten the image surface. Lens data for the respective lens groups shown in Figure 11 is listed in TABLE 6.

**TABLE 6**

| | r | d | n | γ |
|---|---|---|---|---|
| 1. | ∞ | 1.0 | 1.613 | 44.4 |
| 2. | 25.00 | 3.6 | 1.613 | 58.5 |
| 3. | -95.50 | 31.0 | | |
| 4. | -39.40 | 4.8 | 1.620 | 60.3 |
| 5. | -15.50 | 1.8 | 1.613 | 44.4 |
| 6. | 75.80 | 21.7 | | |
| 7. | -770.00 | 3.6 | 1.613 | 44.4 |
| 8. | 141.00 | 12.0 | 1.694 | 53.8 |
| 9. | -57.30 | 0.3 | | |
| 10. | 143.20 | 6.5 | 1.694 | 53.8 |
| 11. | -394.00 | | | |
| Focal length: 100; F-number: 8.3; Back focus: 118.49; Image size: 40 ⌀ (angle of view: 23°) | | | | |

Figure 12 shows aberration curves illustrating the spherical aberration and the astigmatism produced by the lenses in the sixth embodiment.

When the lenses shown in Figure 11 are symmetrical with respect to the above-described plane surface which vertically intersects the lens disposed at the centre of the optical system, two lenses are cemented together with the double-convex lens disposed at the centre of the three lenses. In this lens system, the five convex lenses are made of Kruz-Flint glass. The use of the Kruz-Flint glass reduces the chromatic aberration by 1/2 to 1/3 times.

### Seventh Embodiment

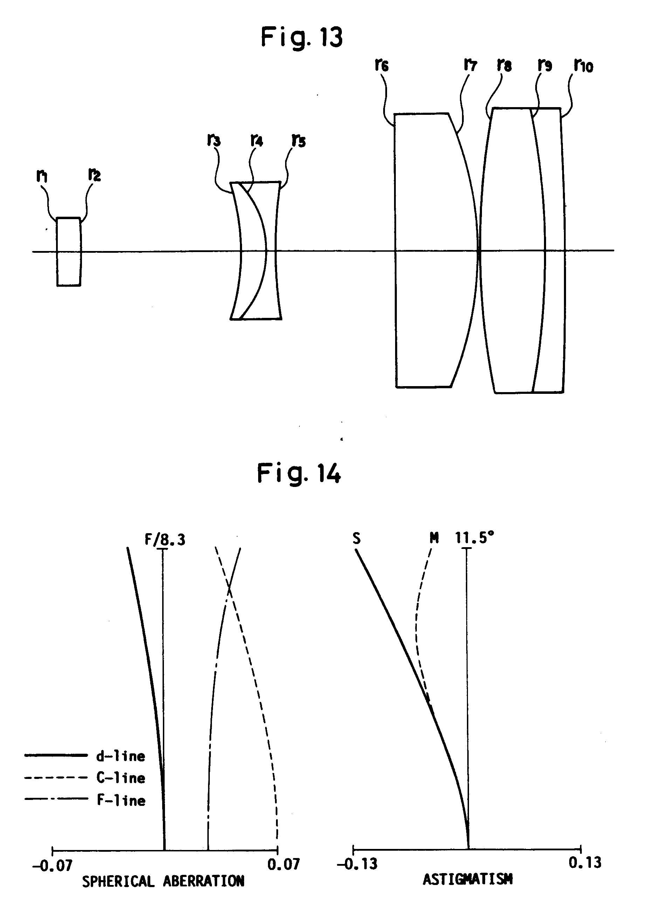

Figure 13 shows a lens arrangement of a seventh embodiment in which the combination of lenses is different from those of the third to fifth embodiments, but similarly to these three embodiments, two lens groups are cemented together. Lens data for the respective lens groups shown in Figure 13 is listed in TABLE 7.

**TABLE 7**

| | r | d | n | γ |
|---|---|---|---|---|
| 1. | ∞ | 4.3 | 1.620 | 60.3 |
| 2. | -98.9 | 30.8 | | |
| 3. | -41.15 | 1.8 | 1.595 | 35.5 |
| 4. | 30.2 | 5.0 | 1.620 | 60.3 |
| 5. | 78.75 | 22.65 | | |
| 6. | -1850.00 | 16.00 | 1.694 | 53.8 |
| 7. | -59.35 | 0.5 | | |
| 8. | 144.70 | 12.5 | 1.694 | 53.8 |
| 9. | -120.00 | 3.5 | 1.648 | 33.8 |
| 10. | -457.40 | | | |
| Focal length: 100; F-number: 8.3; Back focus: 111.37; Image size: 40 ⌀ (angle of view: 23°) | | | | |

Figure 14 shows aberration curves illlustrating the spherical aberration and the astigmatism produced by the lenses in the seventh embodiment.

### Eighth Embodiment

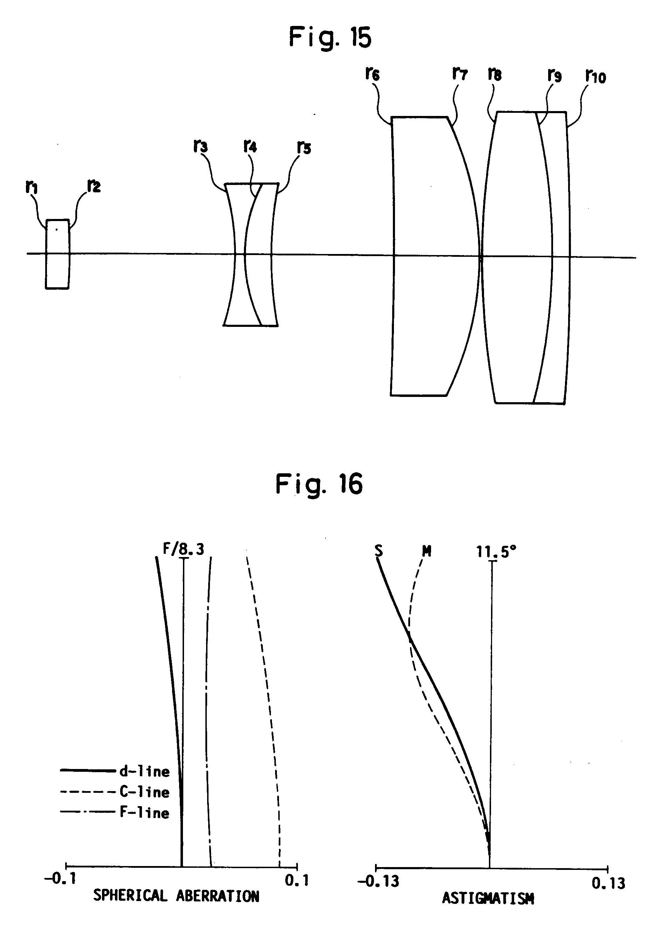

Figure 15 shows a lens arrangement showing an eighth embodiment in which, similarly to the seventh embodiment, two lens groups are cemented together. Lens data for the respective lens groups shown in Figure 15 is listed in TABLE 8.

**TABLE 8**

| | r | d | n | γ |
|---|---|---|---|---|
| 1. | ∞ | 4.3 | 1.620 | 60.3 |
| 2. | -98.90 | 30.7 | | |
| 3. | -42.10 | 5.0 | 1.620 | 60.3 |
| 4. | -19.00 | 1.8 | 1.613 | 37.0 |
| 5. | 82.60 | 22.65 | | |
| 6. | ∞ | 16.00 | 1.694 | 53.8 |
| 7. | -60.55 | 0.5 | | |
| 8. | 144.70 | 12.5 | 1.694 | 53.8 |
| 9. | -120.00 | 3.5 | 1.651 | 38.2 |
| 10. | -457.40 | | | |
| Focal length: 100; F-number: 8.3; Back focus: 112.07; Image size: 40 ⌀ (angle of view: 23°) | | | | |

Figure 16 shows aberration curves illustrating the spherical aberration and the astigmatism produced by the lenses in the eighth embodiment.

The second to eighth embodiment shown in Figures 3 to 16 are modifications of the first embodiment in which one lens group consists of a number of lenses cemented together with a glass material having a different refractive index and a dispersive power from those of the lenses so as to correct the chromatic aberration and flatten the image surface. The plane face at right angles to the optical axis is assumed to vertically intersect the centre of the double-convey lens disposed in the centre of the lens system and the portion behind the plane face.

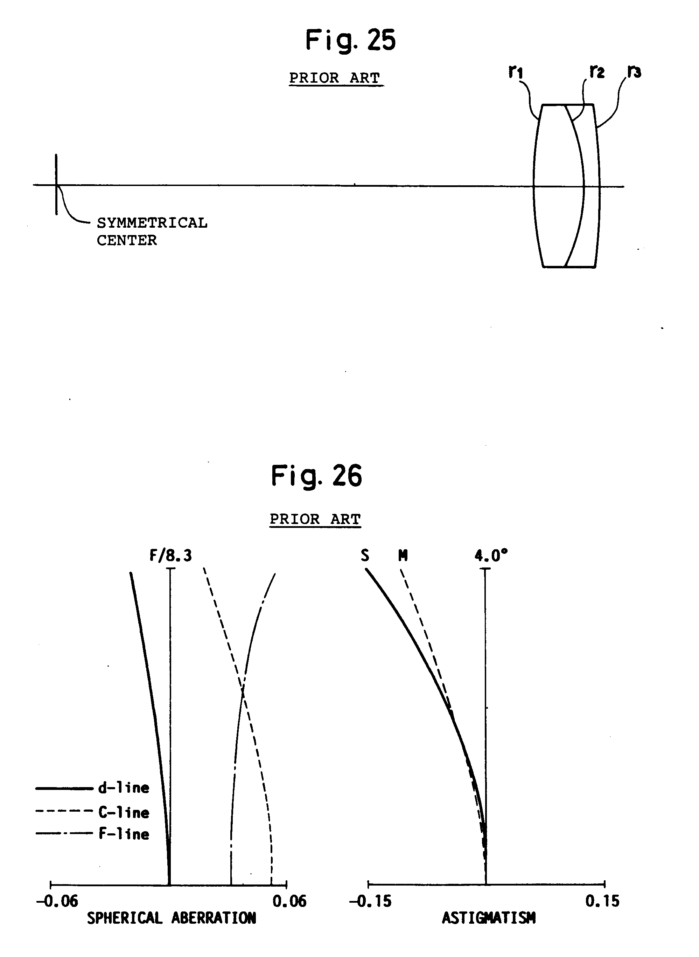

Figure 25 shows an example of known telecentric image-forming optical system in which a double-convex lens is not disposed at the centre of the lens system. Lens data for the respective lenses is listed in Table 9.

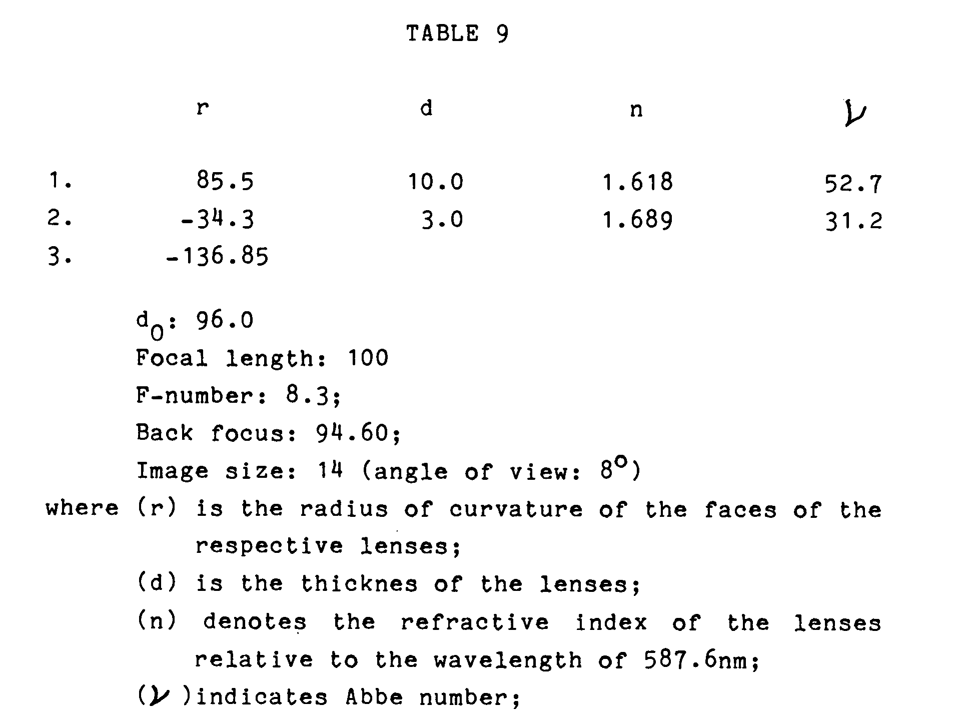

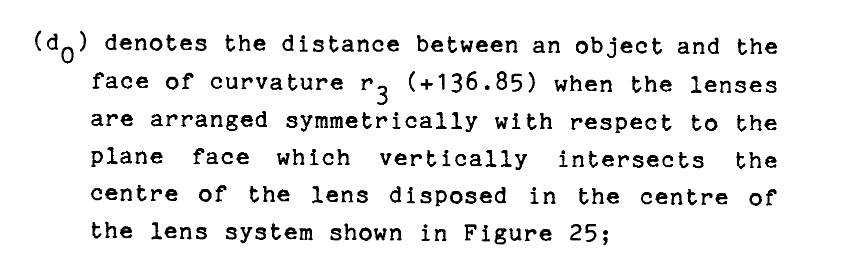

Figure 26 illustrates the spherical aberration and the astigmatism produced by the lenses of the telecentric image-forming optical system shown in Figure 25.

Comparing the above-described embodiments with the known telecentric image-forming optical system, it is apparent that a telecentric image-forming optical system embodying the present invention has a wider angle of view. That is, the length of the telecentric image-forming optical system in each of the above-described embodiments is almost equal to the known telecentric image-forming optical system shown in Figure 25, but the dimension of the image plane which can be formed is substantially greater than that of the above-described telecentric image-forming optical system. In practice, this may be as much as 3 times greater.

In each of the above-described second to eighth embodiments, the principal focal point of the lens system does not coincide with the plane face which is at right angles to the optical axis and vertically intersects the centre of the central double-convex lens, but is disposed in the vicinity of the plane face. This is because the characteristic of the telecentric optical system is not degraded by the influence of the spherical aberration of the lens system. In fact, the position of a minimum circle of confusion formed by a parallel light flux incident from an image on the lens system coincides with the above-described plane face.

Accordingly, the symmetrical arrangement of the lens group with respect to the above-described plane face in the second to eighth embodiments allows the formation of a telecentric image-forming optical system in which the object size is magnified by one, i.e., the large angle of view is wide, that is, the object size is large.

The same effect can also be obtained by making a position a little forward from the above-described plane face the reference face relative to which the lens system is symmetrically arranged. In this case, an air space is provided in the centre face of the double-convex lens.

It is possible to obtain the same effect by combining the lens systems of the second to eighth embodiments. A ninth embodiment which is to be described herein below is the combination of the seventh and eighth embodiments.

### Ninth Embodiment

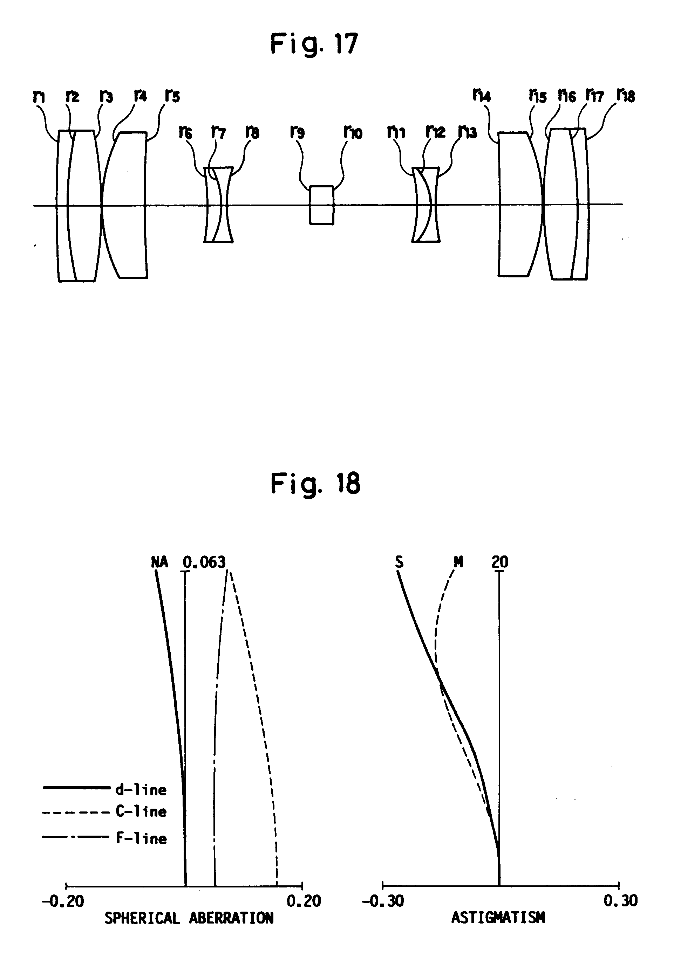

Figure 17 shows a lens arrangement of a ninth embodiment in which the lens systems of the seventh and eighth embodiments are combined with each other. In this embodiment, the change in the astigmatism caused by a wavelength is corrected by the lens groups disposed in front of and behind the plane face disposed at the centre of the lens system, so that the astigmatism in this embodiment is smaller than that of a lens system which is perfectly symmetrical with respect to the centrally positioned plane face. Lens data for the respective lens groups shown in Figure 17 is listed in TABLE 10.

**TABLE 10**

| | r | d | n | γ |
|---|---|---|---|---|
| 1. | 457.40 | 3.5 | 1.648 | 33.8 |
| 2. | 120.00 | 12.5 | 1.694 | 53.8 |
| 3. | -144.70 | 0.5 | | |
| 4. | 59.35 | 16.0 | 1.694 | 53.8 |
| 5. | 1850.00 | 22.65 | | |
| 6. | -78.75 | 5.0 | 1.620 | 60.3 |
| 7. | -30.20 | 1.8 | 1.595 | 35.5 |
| 8. | 41.15 | 30.8 | | |
| 9. | 98.90 | 8.6 | 1.620 | 60.3 |
| 10. | -98.90 | 30.7 | | |
| 11. | -42.10 | 5.0 | 1.620 | 60.3 |
| 12. | -19.00 | 1.8 | 1.613 | 37.0 |
| 13. | 82.60 | 22.65 | | |
| 14. | ∞ | 16.00 | 1.694 | 53.8 |
| 15. | -60.55 | 0.5 | | |
| 16. | 144.70 | 12.50 | 1.694 | 53.8 |
| 17. | -120.00 | 3.5 | 1.651 | 38.2 |
| 18. | -457.40 | | | |
| dₒ (distance between object and face of curvature r₁): 111.37; Distance between object and image: 417.44; Image-forming magnification: 1; Image size: 40 ⌀; F-number: 8.0 (NA: 0.063) | | | | |

Figure 18 shows aberration curves illustrating the spherical aberration and the astigmatism produced by the lenses in the ninth embodiment.

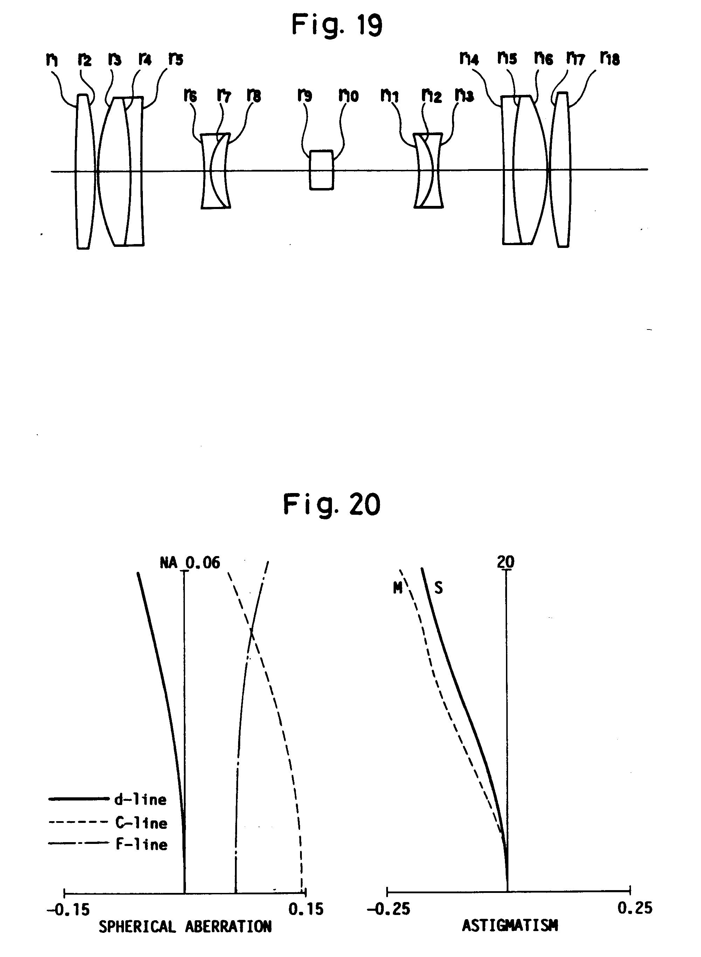

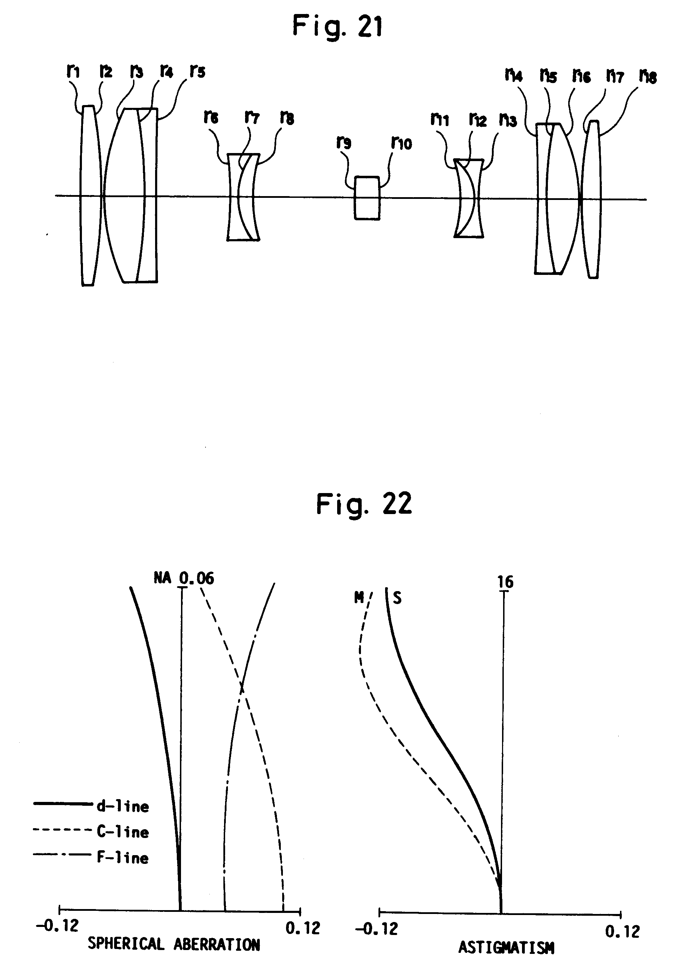

Figure 19 shows a lens system in in which the lens system of the fifth embodiment shown in Figure 9 is arranged symmetrically relative to the face of curvature r₁. This lens system constitutes an image-forming optical system in whcih the image of an object is magnified by one. This lens system is for comparison with the lens system shown in Figure 21.

The lens data for the lenses shown in Figure 19 is listed in the following TABLE 11.

**TABLE 11**

| | r | d | n | γ |
|---|---|---|---|---|
| 1. | 455.30 | 6.8 | 1.694 | 53.8 |
| 2. | -144.00 | 0.6 | | |
| 3. | 58.45 | 12.3 | 1.694 | 53.8 |
| 4. | -144.00 | 3.8 | 1.651 | 38.2 |
| 5. | 2100.00 | 22.4 | | |
| 6. | -77.75 | 1.8 | 1.613 | 37.0 |
| 7. | 18.45 | 5.0 | 1.620 | 60.3 |
| 8. | 41.00 | 30.8 | | |
| 9. | 98.45 | 8.6 | 1.620 | 60.3 |
| 10. | -98.45 | 30.8 | | |
| 11. | -41.00 | 5.0 | 1.620 | 60.3 |
| 12. | -18.45 | 1.8 | 1.613 | 37.0 |
| 13. | 77.75 | 22.4 | | |
| 14. | -2100.00 | 3.8 | 1.651 | 38.2 |
| 15. | 144.00 | 12.3 | 1.694 | 53.8 |
| 16. | -58.40 | 0.6 | | |
| 17. | 144.00 | 6.8 | 1.694 | 53.8 |
| 18. | -455.30 | | | |
| dₒ (distance between object and face of curvature r₁): 118.38; Distance between object and image: 412.35); Image-forming magnification: 1; Image size: 40 ⌀; F-number: 8.3 (NA: 0.06) | | | | |

Figure 20 shows aberration curves illustrating the spherical aberration and the astigmatism in the lens system of Figure 19.

It is not necessarily the case that the focal length of the lens group disposed in front of the centre of the lens system is the same as that of those disposed behind the centre of the lens system as in the lens systems shown in the ninth embodiment (Figure 17) and Figure 19. For example, a telecentric image-forming optical system whose image-forming magnification is M times an object size can be formulated as follows: The radius of curvature and the distance between the adjacent faces of the lenses of a lens group placed behind the centre of the lens system are proportionally increased or reduced by M times those of the lens group placed in front of the centre of the lens system.

### Tenth Embodiment

Figure 21 illustrates a lens arrangement showing a tenth embodiment in which the construction of the lenses disposed in front of the centre of the lens system are the same as those of the fifth embodiment and the lenses behind the centre of the lens system are constructed by proportionally reducing the image-forming magnification of the lens system of the fifth embodiment by 0.8 times. Thus, a telecentric image-forming optical system whose image-forming magnification is 0.8 is achieved. Lens data for the respective lens groups shown in Figure 21 is listed in TABLE 12.

**TABLE 12**

| | r | d | n | γ |
|---|---|---|---|---|
| 1. | 455.30 | 6.8 | 1.694 | 53.8 |
| 2. | -144.00 | 0.6 | | |
| 3. | 58.45 | 12.3 | 1.694 | 53.8 |
| 4. | -144.00 | 3.8 | 1.651 | 38.2 |
| 5. | 2100.00 | 22.4 | | |
| 6. | -77.75 | 1.8 | 1.613 | 37.0 |
| 7. | 18.45 | 5.0 | 1.620 | 60.3 |
| 8. | 41.00 | 30.8 | | |
| 9. | 98.45 | 7.74 | 1.620 | 60.3 |
| 10. | -78.76 | 24.64 | | |
| 11. | -32.80 | 4.0 | 1.620 | 60.3 |
| 12. | -14.76 | 1.44 | 1.613 | 37.0 |
| 13. | 62.20 | 17.92 | | |
| 14. | -1680.00 | 3.04 | 1.651 | 38.2 |
| 15. | 115.20 | 9.84 | 1.694 | 53.8 |
| 16. | -46.76 | 0.48 | | |
| 17. | 115.20 | 5.44 | 1.694 | 53.8 |
| 18. | -364.24 | | | |
| dₒ (distance between object and face of curvature r₁): 118.38; Distance between object and image: 371.12; Image-forming magnification: 0.8; Image size: 32 ⌀; F-number: 8.3 (NA: 0.06) | | | | |

Figure 22 shows aberration curves illustrating the spherical aberration and the astigmatism produced by the lenses in the tenth embodiment.

With a telecentric image-forming optical system which has an image-forming magnification other than an equal magnification (magnification is one) and forms a large image size, the following method may be adopted: It is not necessry to change the focal length by proportionally increasing or reducing the radius of curvature and the distance between adjacent faces of the lenses of the lens group in front of and behind the centre of the lens system as shown in the tenth embodiment. Instead, for example, a desired image-forming magnification can be obtained by shifting the double-convex lens from the centre of the lens system with respect to the front and rear lens groups which are symmetrical with respect to a certain plane face.

### Eleventh Embodiment

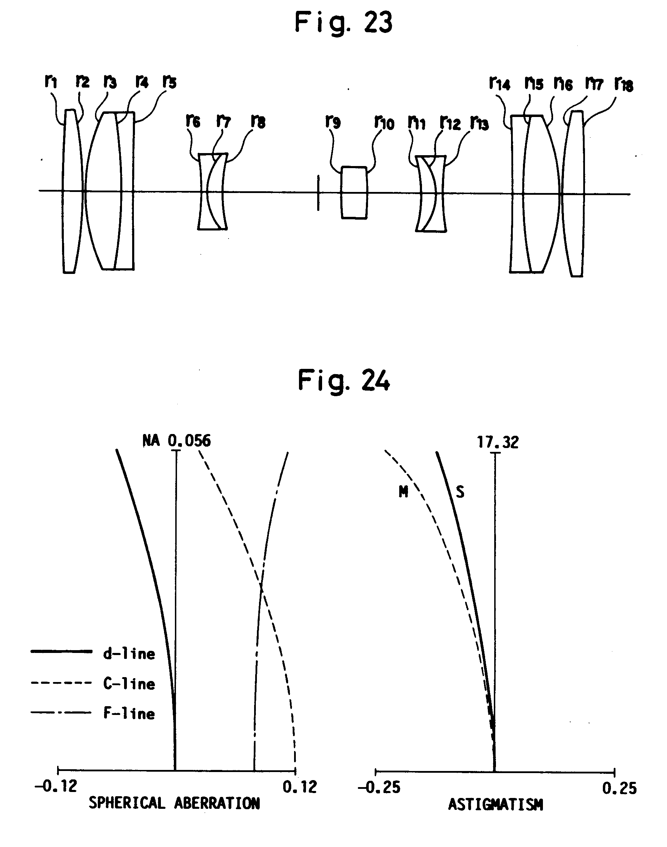

The lens groups of an eleventh embodiment are arranged by shifting the double-convex lens from the centre of the lens system. Figure 23 shows the arrangement of the lens system. Lens data for the respective lens groups shown in Figure 23 is listed in TABLE 13.

**TABLE 13**

| | r | d | n | γ |
|---|---|---|---|---|
| 1. | 418.45 | 6.8 | 1.694 | 53.8 |
| 2. | -144.00 | 0.6 | | |
| 3. | 58.45 | 12.3 | 1.694 | 53.8 |
| 4. | -144.00 | 3.8 | 1.651 | 38.2 |
| 5. | 2460.00 | 22.4 | | |
| 6. | -76.43 | 1.8 | 1.613 | 37.0 |
| 7. | 17.48 | 5.0 | 1.623 | 58.2 |
| 8. | 40.49 | 40.0 | | |
| 9. | 114.46 | 8.6 | 1.620 | 60.3 |
| 10. | -86.15 | 17.85 | | |
| 11. | -40.49 | 5.0 | 1.623 | 58.2 |
| 12. | -17.48 | 1.8 | 1.613 | 37.0 |
| 13. | 76.43 | 22.4 | | |
| 14. | -2460.00 | 3.8 | 1.651 | 38.2 |
| 15. | 144.00 | 12.3 | 1.694 | 53.8 |
| 16. | -58.45 | 0.6 | | |
| 17. | 144.00 | 6.8 | 1.694 | 53.8 |
| 18. | -418.45 | | | |
| dₒ (distance between object and face of curvature r₁): 125.5; Distance between object and image: 410.24; Image-forming magnification: 0.865; Image size: 34.64 ⌀; F-number: 8.9 (NA: 0.056) | | | | |

Figure 24 shows aberration curves illustrating the spherical aberration and the astigmatism produced by the lenses in the eleventh embodiment.

In the eleventh embodiment, the central double-convex lens is not cemented, so that the lens is not achromatic. Therefore, if the double-convex lens is disposed at such a position that the front and rear lens groups are unsymmetrical, a lateral chromatic aberration occurs. However, in a telecentric image-formingopticalsystem,theimage-formingmagnification is not varied when the object distance is varied. Thus, the appropriate selection of an object distance (125.5 in this embodiment) corrects the lateral chromatic aberration without varying the image-forming magnification.

As is apparent from the foregoing description, the present invention is relatively simple in its lens construction and arrangement and provides a telecentric image-forming optical system in which the dimension of the image plane is large compared with the distance between the object and the image surface, and further, the object is magnified by more or less than one.

Moreover, when a telecentric image-forming optical system embodying the invention is applied to an apparatus, it can be compactly manufactured because the length of the optical system is compact.

### Application Example

An example of one practical application of an optical system embodying the present invention is described hereinbelow. This example relates to a read apparatus of a block copy layout sheet for effecting a prepress in a printing process.

A block copy is formed at the initial stage of the prepress. The prepress specifies the arrangements of letters, line drawings, photographs and the like on a sheet to be printed. The specification accurately performed on a layout sheet is called a layout block copy or a block copy layout sheet.

The block copy layout sheet is formed by a digitizer or an automatic drafting machine. An original document to be laid out in a specified position is read by a scanner and stored in the form of digital data. Data for laying out an image is necessary to read the data of the original document. The read apparatus of the block copy layout sheet reads out the data for laying out the image.

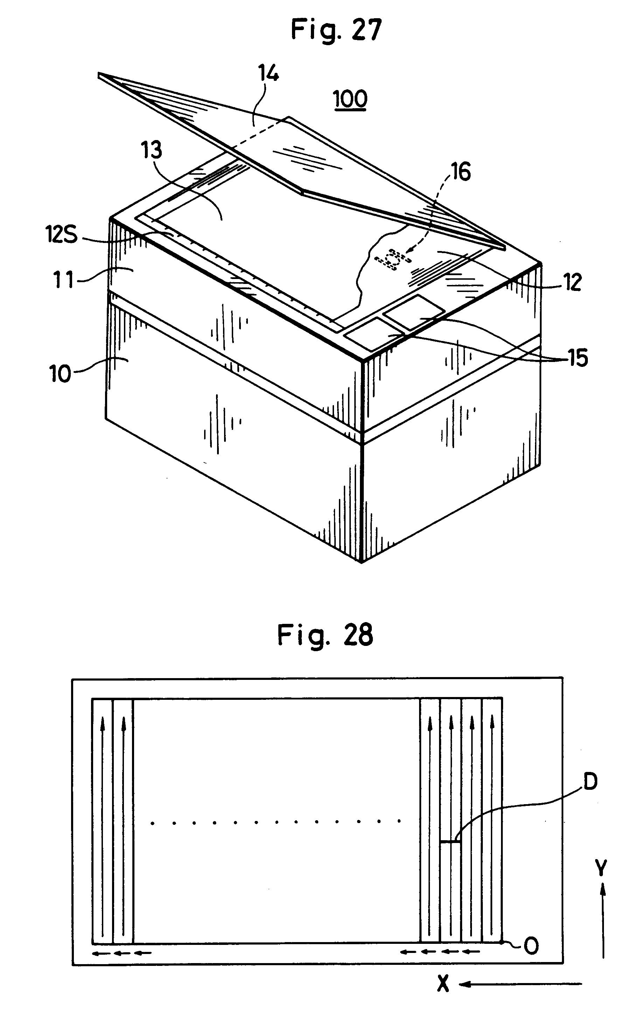

Figure 27 is a perspective view of a read apparatus 100 for reading the block copy layout sheet to which an optical system embodying the present invention is applied. The apparatus comprises an electronics portion 10 provided at the lower portion thereof and a scan mechanism portion 11. The scan mechanism portion 11 is provided with an original document glass 12 whose periphery is fixed to an inner frame disposed at the uppermost portion of the apparatus. A scale 125 for positioning a block copy layout sheet on the original document glass 12 is provided in the longitudinal direction of the original document-placing glass. The read apparatus is also provided with a cover 14 for covering the original document and an operation panel 15. When the start key on the operation panel 15 is actuated, a scanning head 16 shown in phantom automatically moves to scan block copy layout sheet 13.

The apparatus has a mechanism similar to a copying machine for copying documents and figures or an image reader for inputting an image to a personal computer. But the apparatus 100 differs from the copying machine or the image reader in two respects. One of the differences is that the area of a block copy layout sheet to be placed on the original document glass is as great as, for example, 655 x 869mm. The second difference is that it has a resolution as high as 1000 - 2000 lines/inch(394-788 lines/cm). That is, the apparatus 100 reads the data included in a great area at a high resolution. The apparatus 100 is required to read out the data as fast as possible. But the following problem arises.

It is difficult with an original document glass 12 consisting of a single glass to position a block copy layout sheet thereon with no space left therebetween. Even though the block copy layout sheet is secured to the frame of the original document placing glass 12, it flexes thereon. In this case, a small mechanical error greatly affects the optical system mounted in the apparatus 100. In order to maintain a high resolution irrespective of the position of the block copy layout sheet, it is preferable that an image-forming magnification on an image surface is not varied even if there is a small amount of change in the block copy layout sheet. It is for this reason that a telecentric image-forming optical system is adopted in the scanning head. Sheets are frequently pasted on some regions of the block copy layout sheet 13, so that the surface of the block copy layout sheet 13 becomes irregular or step-shaped. Problems arising from this can also be solved by the provision of the telecentric image-forming optical system.

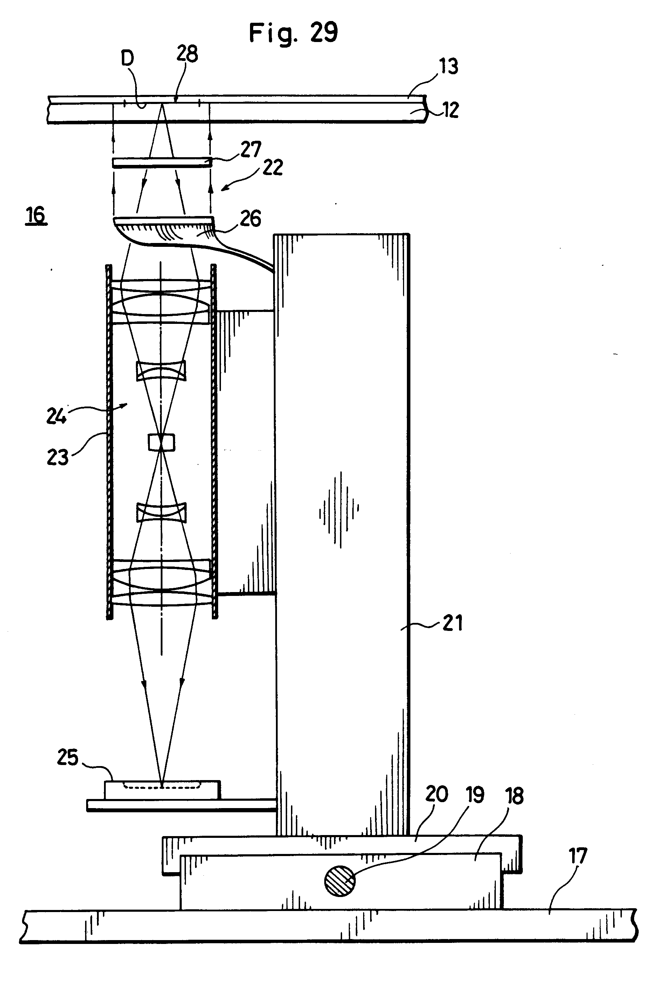

In order to shorten the period of time for reading data, it is necessary for the scanning head 16 to scan the block copy layout sheet 13 at a high speed. However, the scanning speed of the scanning head 16 is restricted to maintain a predetermined high resolution. To this end, the scanning width of a raster should be great. In this respect, an optical system is required in which the image size, namely the angle of view, is wide so that the scanning head 16 performs a preferable scanning. However, as described above in the Prior Art, it is difficult to make the angle of view wide in a telecentric image-forming optical system. If the angle of view is made to be wide without taking any countermeasures, the optical system becomes large-sized. Thus, the length of the optical system becomes long. As a result, it is difficult to apply the scanning head optical system to the scanning head 16 which travels in (or is driven by) an apparatus. In order to obtain a read range for the scanning head 16 to travel, the scanning head 16 is required to be compact. The angle of view is needs to be wide in order to shorten the length of the optical system. In this sense, a telecentric image-forming optical system embodying the present invention in which the angle of view is wide compared with the whole length of the optical system is suitable for use in this kind of apparatus. Figure 28 shows how the scanning head 16 scans an original document. Figure 29 is a schematic view showing the construction of the scanning head 16.

The scanning head 16 travels at a constant speed from the rest position (O) in the Y-axis direction. At this time, the amount of data which the scanning head 16 reads is (D). When it has reached an end point of the Y-axis, it returns to the rest position (Y = 0). Thereafter, the read width (D) is indexed in that X-axis direction, and then, the scanning head travels in the Y-axis direction at a constant speed. Thus, the scanning head 16 moves along a comb-shaped path and scans the entire surface of the block copy layout sheet. The scanning head 16 is controlled by a microcomputer and driven by a motor. According to this example, the read width (D) is 32mm and the effective read range is 515 x 728mm. The scanning head 16 completes a scanning when it scans the block copy layout sheet 26 times. It takes approximately 17 minutes for the scanning head 16 to complete the scanning when a scanning line density is 2000 lines/inch (788 lines/cm).

As shown in Figure 29, the scanning head 16 travels below the original document glass 12 and in parallel therewith. A base 18 is mounted on a rail 17 which extends in the X-axis direction at both end points disposed in the Y-direction. The ball thread 19 extends through a moving base 20, so that the moving base 20 slides smoothly on the base 18 in the Y-axis direction upon rotation of the ball thread 19. A box-shaped supporting member 21 is mounted on the moving base 20 perpendicular thereto. The supporting member 21 has affixed thereto an illuminating optical system 22, a telecentric image-forming optical system 24 embodying the present invention supported by a lens-barrel 23, and a one-dimensional CCD element 25.

The illuminating optical system 22 comprises a halogen lamp (not shown) serving as a light source, a collimator lens, an optical fibre 26 serving as an optical guide, and a cylindrical lens 27. A light emitted from the halogen lamp is focussed on the upper surface of the original document glass 12 and is incident at 45° on the top surface of the block copy layout sheet through a slit.

The image of a region 28 corresponding to the scanning width (D) of the block copy layout sheet 13 is formed on the light receiving face of the CCD 25 by the telecentric image-forming optical system 24. In this example, the CCD 25 reads approximately 2500 pixels. The area of one pixel is 12.7µm on the light receiving face.

The features disclosed in the foregoing description, in the following claims and/or in the accompanying drawings may, both separately and in any combination thereof, be material for realising the invention in diverse forms thereof. The subject matter for which protection is sought is defined in the claims.

## Claims

1. A telecentric image-forming optical system, comprising
a first lens group including a double-convex lens, a meniscus lens or a plano-convex lens, each convex side of which is arranged to face an object, and a double-concave lens,
a second lens group including a double-convex lens, a meniscus lens or a plano-convex lens, each convex side of which is arranged to face an image, and a double-concave lens and
a double-convex lens disposed between the first lens group and the second lens group, in which the secondary focal point of the first lens group and the principal focal point of the second lens group substantially coincide in the vicinity of the double-convex lens, characterized in
that each of the first and second lens groups includes a cemented lens comprising a first lens of positive power and a second lens of negative power, in which the first lens is made of a first glass material having a first refractive index (n₁) and a first Abbe number (ν₁) with respect to d-line, and the second lens is made of a second glass material having a second refractive index (n₂) and a second Abbe number (ν₂) with respect to d-line, and
that the difference (|n₁-n₂|) between the first refractive index (n₁) and the second refractive index (n₂) |n₁-n₂| is smaller than 0,081 and the difference (ν₁-ν₂) of the first Abbe number (ν₁) and the second Abbe number (ν₂) is greater that 9,4.

2. A telecentric image-forming optical system according to claim 1, characterized in that the secondary focal length of the first lens group coincides with the primary focal length of the second lens group.

3. A telecentric image-forming optical system according to claim 2 , characterized in that the lens shape of the first lens group and that of the second lens group is symmetrical with respect to a plane which is imaginarily disposed at the center of the optical system and is orthogonal to the optical axis.

4. A telecentric image-forming optical system according to claim 1, characterized in that the focal length of the first lens group and the focal length of the second lens group are different from each other.

5. A telecentric image-forming optical system according to claim 4, characterized in that the dimension, including the radius of curvature and the interval between the lens faces along the optical axis, of the lenses forming the second lens group is proportional to the dimension of the lenses forming the first lens group.

6. A telecentric image-forming optical system according to claim 2, characterized in that the double-convex lens, is disposed at a position that differs the coincident point of the secondary focal point of the first lens group and the principal focal point of the secondary lens group.

7. A telecentric image-forming optical system according to one of the preceeding claims, characterized in that the double-convex lens is disposed at a position that differs from the center of the optical system.

8. An apparatus for reading an original document by scanning the original document, using a scanning head which comprises an illuminating optical system for illuminating the original document, a solid state image sensor, and a telecentric image-forming optical system for converting a light flux reflected from the original document on the solid state image sensor, wherein a telecentric image-forming optical system as defined in claim 1 is provided for converting a light flux reflected from the original document on the solid state image sensor.

## Patentansprüche

1. Telezentrisches optisch abbildendes System umfassend
eine erste Linsengruppe, die eine bikonvexe Linse, eine Miniskuslinse oder eine plankonvexe Linse, wobei die jeweilige konvexe Seite derselben so angeordnet ist, daß sie einem Objekt gegenübersteht, und eine bikonkave Linse enthält,
eine zweite Linsengruppe, die eine bikonvexe Linse, eine Miniskuslinse oder eine plankonvexe Linse, wobei die jeweilige konvexe Seite derselben so angeordnet ist, daß sie einer Abbildung gegenübersteht, und eine bikonkave Linse enthält, und
eine bikonvexe Linse, die zwischen der ersten Linsengruppe und der zweiten Linsengruppe angeordnet ist, wobei der sekundäre Brennpunkt der ersten Linsengruppe und der Hauptbrennpunkt der zweiten Linsengruppe im wesentlichen in der Nachbarschaft der bikonvexen Linse zusammenfallen, dadurch gekennzeichnet,
daß sowohl die erste als auch zweite Linsengruppe eine zusammengekittete Linse umfaßt, die eine erste Linse von positiver Brennstärke und eine zweite Linse von negativer Brennstärke umfaßt, wobei die erste Linse aus einem ersten Glasmaterial mit einem Brechungsindex (n₁) und einer ersten Abbe-Zahl (ν₁) bezuglich der d-Linie und die zweite Linse aus einem zweiten Glasmaterial mit einem zweiten Brechungsindex (n₁) und einer zweiten Abbe-Zahl (ν₂) bezüglich der d-Linie gemacht ist, und
daß die Differenz (|n₁-n₂|) zwischen dem ersten Brechungsindex (n₁) und dem zweiten Brechungsindex (n₂) |n₁-n₂| kleiner als 0.081 und die Differenz (ν₁-ν₂) der ersten Abbe-Zahl (ν₁) und der zweiten Abbe-Zahl (ν₂) größer als 9.4 ist.

2. Telezentrisches optisch abbildendes System gemäß Anspruch 1, dadurch gekennzeichnet, daß die sekundäre Brennweite der ersten Linsengruppe mit der Kauptbrennweite der zweiten Linsengruppe zusammenfällt.

3. Telezentrisches optisch abbildendes System nach Anspruch 2, dadurch gekennzeichnet, daß die Linsenform der ersten Linsengruppe und der zweiten Linsengruppe symmetrisch bezüglich einer Ebene ist, die imaginärerweise an dem Zentrum des optischen Systems angeordnet und orthogonal zur optischen Achse ist.

4. Telezentrisches optisch abbildendes System nach Anspruch 1, dadurch gekennzeichnet, daß die Brennweite der ersten Linsengruppe und die Brennweite der zweiten Linsengruppe voneinander verschieden sind.

5. Telezentrisches optisch abbildendes System nach Anspruch 4, dadurch gekennzeichnet, daß die Abmessung, die den Krümmungsradius und den Abstand zwischen den Linsenseiten entlang der optischen Achse umfaßt, der Linsen, die die zweite Linsengruppe bilden, proportional zu der Abmessung der Linsen ist, die die erste Linsengruppe bilden.

6. Telezentrisches optisch abbildendes System nach Anspruch 2, dadurch gekennzeichnet, daß die bikonvexe Linse an einer Position angeordnet ist, die sich von dem Punkt des Zusammentreffens des sekundären Brennpunktes der ersten Linsengruppe und des Hauptbrennpunktes der zweiten Linsengruppe unterscheidet.

7. Telezentrisches optisch abbildendes System nach einem der vorangegangenen Ansprüche, dadurch gekennzeichnet, daß die bikonvexe Linse an einer Position angeordnet ist, die von dem Zentrum des optischen Systems abweicht.

8. Apparat zum Lesen eines Originaldokuments durch Abtasten des Originaldokuments, der einen Abtastkopf benutzt, der ein optisches Beleuchtungssystem zur Beleuchtung des Originaldokumentes, einen Festkörperbildsensor und ein telezentrisches optisch abbildendes System zur Konvertierung eines Lichtstroms, der von den Originaldokument auf den Festkörperbildsensor reflektiert wird, umfaßt, wobei ein telezentrisches optisch abbildendes System, wie in Anspruch 1 definiert, zum Konvertieren eines Lichtstroms, der von dem Originaldokument auf den Festkörperbildsensor reflektiert wird zur Verfügung gestellt wird.

## Revendications

1. Système optique télécentrique de formation d'image, comportant un premier groupe de lentilles qui comprend une lentille biconvexe, une lentille ménisque ou une lentille plan-convexe, chaque côté convexe étant disposé pour faire face à un objet, ainsi qu'une lentille biconcave,
un second groupe de lentilles qui comprend une lentille biconvexe, une lentille ménisque ou une lentille plan-convexe, chaque côté convexe étant disposé pour faire face à une image, ainsi qu'une lentille biconcave et une lentille biconvexe disposée entre le premier groupe de lentilles et le second groupe de lentilles, le foyer secondaire du premier groupe de lentilles et le foyer principal du second groupe de lentilles étant situés au voisinage de la lentille biconvexe, caractérisé en
ce que chacun des premier et second groupes de lentilles comprend une lentille collée comportant une première lentille convergente et une seconde lentille divergente, la première lentille étant réalisée en un premier verre ayant un premier indice de réfraction (n₁) et un premier coefficient d'Abbe (ν₁) par rapport à la ligne d, la seconde lentille étant réalisée en un deuxième verre ayant un deuxième indice de réfraction (n₂) et un deuxième coefficient d'Abbe (ν₂) par rapport à la ligne d, et en
ce que la différence (|n₁-n₂|) entre le premier indice de réfraction (n₁) et le deuxième indice de réfraction (n₂) est inférieure à 0,081 et la différence (ν₁-ν₂) entre le premier coefficient d'Abbe (ν₁) et le deuxième coefficient d'Abbe (ν₂) est supérieure à 9,4.

2. Système optique télécentrique de formation d'image selon la revendication 1, caractérisé en ce que la distance focale secondaire du premier groupe de lentilles est égale à la distance focale primaire du second groupe de lentilles.

3. Système optique télécentrique de formation d'image selon la revendication 2, caractérisé en ce que la forme des lentilles du premier groupe de lentilles et la forme des lentilles du second groupe de lentilles sont symétriques par rapport à un plan disposé de façon imaginaire au centre du système optique et perpendiculaire à l'axe optique.

4. Système optique télécentrique de formation d'image selon la revendication 1, caractérisé en ce que la distance focale du premier groupe de lentilles et la distance focale du second groupe de lentilles sont différentes l'une de l'autre.

5. Système optique télécentrique de formation d'image selon la revendication 4, caractérisé en ce que les dimensions des lentilles constituant le second groupe de lentilles, y compris le rayon de courbure et l'intervalle entre les faces des lentilles le long de l'axe optique, sont proportionnelles aux dimensions des lentilles constituant le premier groupe de lentilles.

6. Système optique télécentrique de formation d'image selon la revendication 2, caractérisé en ce que la lentille biconvexe est disposée en un emplacement différent du foyer secondaire du premier groupe de lentilles et du foyer principal du second groupe de lentilles.

7. Système optique télécentrique de formation d'image selon l'une des revendications précédentes, caractérisé en ce que la lentille biconvexe est disposée en un emplacement différent du centre du système optique.

8. Appareil pour lire un document original par analyse de ce document original utilisant une tête d'analyse qui comporte un système optique d'éclairage pour éclairer le document original, un transformateur d'image à transistors et un système optique télécentrique de formation d'image pour traiter le flux lumineux réfléchi sur le transformateur d'image à transistors à partir du document original, dans lequel un système optique télécentrique de formation d'image, selon la revendication 1 est prévu pour traiter le flux lumineux réfléchi sur le transformateur d'image à transistors à partir du document original.
